# EUROPEAN PATENT SPECIFICATION

(11) **EP 2 348 882 B1**
(45) Date of publication and mention of the grant of the patent: **26.10.2016**
(21) Application number: 09782724.0
(22) Date of filing: 08.09.2009
(51) Int. Cl.: A23K 50/20, A23K 20/10, A23K 20/111

(54) **USE OF NATURAL SUBSTANCES AS FEED ADDITIVES FOR ANIMALS OF THE GENUS EQUIDAE**
VERWENDUNG VON NATURSTOFFEN ALS FUTTERMITTELZUSATZSTOFFE FÜR TIERE DER GATTUNG EQUIDAE
UTILISATION DE SUBSTANCES NATURELLES COMME ADDITIFS ALIMENTAIRES POUR DES ANIMAUX DU GENRE ÉQUIDÉ

(30) Priority: 27.11.2008 EP 08020629
(43) Date of publication of application: 03.08.2011
(73) Proprietor: DSM IP Assets B.V., 6411 TB Heerlen (NL)
(72) Inventor: FREHNER, Marco, CH-1185 Mont-sur-Rolle (CH); PHILIPPS-WlEMANN, Petra, 49536 Lienen (DE); ELGAARD, Birgit, DK-3330 Goerloese (DK); LOSA, Riccardo, 1145 Bière (CH)
(74) Representative: Schwander, Kuno
(86) International application number: PCT/EP2009/061586
(87) International publication number: WO 2010/060660

(56) References cited:
- EP-A1- 0 630 577
- EP-A2- 2 042 041
- WO-A1-96/13175
- WO-A1-99/59430
- WO-A2-2004/091307
- US-A1- 2008 160 000

## Description

The present invention relates to the use of natural active compounds of guajacol, turmeric, and thymol in the manufacture of a diet for horses.

More particular, this invention relates to the use of the three compounds as defined above for the improvement of the digestibility of the diet, an improved intestinal stability, a better feed intake (improved appetite) and a better welfare and for stabilizing or modulating the gut micro flora of the animal.

Furthermore, the present invention relates to a novel feed composition for animals of the genus equidae which composition comprises the three active compounds of guajacol, turmeric, and thymol.

The term diet, feed or feed composition means any compound, preparation, mixture, or composition suitable for, or intended for intake by the animal.

The genus equidae encompasses horses. Unlike a ruminant, the gut capacity of these animals in relation to their body size is small. This requires that the animal has to consume small amounts of feed at relatively frequent intervals.

Because of the continuous ingestion of small amounts of feed, horses have - in the natural state - a relatively constant flow of substrate available for hind gut bacterial, which allows a natural adapted digestion of the feed. However, under current husbandry practices, this is often not the case. Instead, animals consume a significant portion of their diet over a short period of time. Especially high performance horses, as for example race horses, are fed with a diet which is rich in carbohydrates for increased energy in a very short period of time, preferably ad libitum.

These un-natural feeding methods result in erratic movement of ingesta through the gastrointestinal tract. A major part of the diet often reaches the hindgut relatively undegraded. This allows a bacterial fermentation that causes a significant change in gut pH, i.e. from pH 7 to a pH in the caecum of < 6.5, which in turn, results in fluctuations in species and densities of colonic bacterial populations. This destabilization of the gut is primarily associated with a loss of appetite, which may be observed by a reduced chewing activity and at a later stage with serious metabolic diseases as for example colic, founder, azoturia and other digestive related problems.

Currently there is no known way to control intestinal pH, or stimulate or modify gut bacterial populations in the horse, other than feeding methodology and restrictive use of certain ingredients.

There is therefore a need for a feed composition for use in husbandry feeding which prevents colic, founder and other digestive disorders and which may be fed to the animal in order to stimulate appetite as well as jaw movements and chewing rates.

In view of the deficiencies in the prior art as described above and other related goals well known in the art, one object of the present invention is to provide a feed additive that stimulates the digestibility of the diet, the intestinal stability, the feed intake, appetite of the animal and that stabilizes or modulates the gut micro flora of the animal.

Another object of the present invention is to provide a feed additive that stabilizes gut pH, preferably keeps the pH at a level > 6.3 with the specific objective of maintaining intestinal pH at levels that prevent the formation of maladies associated with pH ranges smaller than 6.3.

These and other objects may become more apparent to those skilled in the art upon reviewing the subject matter of this invention as detailed herein.

The inventors of the present application surprisingly found that the compounds as defined above, especially combinations thereof have a great potential for use in horse feed, e.g. for improving the digestibility of the diet, the intestinal stability, the feed intake, appetite and for modulating the gut micro flora of the animal.

The term "gut" as used herein designates the gastrointestinal or digestive tract (also referred to as the alimentary canal) and it refers to the system of organs within multicellular animals which takes in food, digests it to extract energy and nutrients, and expels the remaining waste.

The term gut "microflora" as used herein refers to the natural microbial cultures residing in the gut and maintaining health by aiding in proper digestion.

The term "modulate" or "stimulate" as used herein in connection with the gut microflora generally means to change, manipulate, alter, or adjust the function or status thereof in a healthy and normally functioning animal, i.e. a non-therapeutic use.

In a second aspect, the present invention provides a horse feed composition comprising the three active compounds of guajacol, turmeric, and thymol.

The invention also provides a method of feeding animals with the three compounds as defined above for the improvement of the digestibility of the diet, an improved intestinal stability, a better feed intake and a better welfare and for stabilizing or modulating the gut micro flora of the animal.

The compounds according to the invention are commercially available or can easily be prepared by a skilled person using processes and methods well-known in the prior art.

The compounds of the invention can be used in the form of natural available extracts or extract-mixtures or in the form of a natural substance.

The term "extract" as used herein includes compositions obtained by solvent extraction (which are also known as "extracted oils"), steam distillation (which are also known as "essential oils") or other methods known to the skilled person. Suitable extraction solvents include alcohols such as ethanol.

By the expression "natural" and "natural substance" is in this context understood a substance which consists of compounds occurring in nature and obtained from natural products or through synthesis.

To the active compound(s) or mixtures thereof or natural substance or extract further active ingredients may be added in minor amounts. Examples of such ingredients are: capsaicin, tannin, piperine, caravacrol, trimethylamine, 3,4, xylenol, furfuryl alcohol, propylidene, butylidene, phtalides, gingerol, lavender oil; deca-, undeca-, dodecalactones, ionones, irone, resorcinol, peppermint oil, alpha-pinene; limonene, anethol, linalool, methyl dihydrojasmonate; carvacrol, propionic, acetic or butyric acid, rosemary oil, clove oil, geraniol, terpineol, citronellol; amyl and/or benzyl salicylate, cinnamaldehyde, vanilline, a plant polyphenol (tannin) and mixtures thereof.

If a mixture of the three compounds as specified above is preferred, turmeric and/or thymol is used as a major component of the mixture, i.e. horse feed composition. Suitably the mixture contains 10-40% by weight of thymol and/or turmeric, 5-30% by weight of guaiacol, and optionally 2-15% by weight of 3-methylphenol and/or eugenol and/or eucalyptol and/or L-menthol, wherein the amounts being calculated on the total amount of said components. The total amount of these active ingredients may vary within wide limits but is finally used in the horse feed from 1 to 500 ppm, preferably between 5 and 150 ppm, calculated on the dry weight of the horse feed.

In a preferred example, the composition comprises the three compounds turmeric, thymol and guajacol as major components of the mixture. Suitably the mixture contains 25-35% by weight of thymol, 20-30% by weight of turmeric, 15-25% by weight of guaiacol, and optionally 5-10% by weight of 3-methylphenol and/or eugenol and/or eucalyptol and/or L-menthol and 1-5% by weight of piperine.

All compounds defined herein above (active compounds and additional ingredients) may be used in animal feeding in form of a feed composition. In such a feed composition the compounds may be used in combination with an emulsifying surfactant. The emulsifying agent can be selected advantageously from those of a rather hydrophilic nature, for example among polyglycerol esters of fatty acids such as esterified ricinoleic acid or propylene glycol esters of fatty acids, saccharo-esters or saccharo-glycerides, polyethylene glycol, lecithins etc.

Another feature of the feed composition can be that the essential oil compounds present in the composition are adsorbed on a vegetable and/or mineral carrier, wherein the mineral carrier is for example selected from the group consisting of silicon dioxide, aluminium and magnesium silicates and wherein the vegetable carrier is for example selected from the group consisting of fibres, as for example wood fibre, wheat semolina and milk derivatives.

The incorporation of the feed composition containing the active compound(s) into a final animal feed, for example horse feed, can be carried out by preparing a premix of the active ingredients and other suitable additives. Such a premix may comprise 2-10% by weight of the active mixture or natural substance or extract, 0-40% by weight of other conventional additives, such as flavorings, and 50-98% by weight of any conventional absorbing support. The support may contain, for example, 40-50% by weight of wood fibres, 8-10% by weight of stearine, 4-5% by weight of curcuma powder, 4-5% by weight of rosemary powder, 22-28% by weight of limestone, 1-3% by weight of a gum, such as gumarabic, 5-50% by weight of sugar and/or starch and 5-15% by weight of water.

This premix is then mixed with vitamins, mineral salts and other feed additive ingredients and then finally added to the feed in such quantities that the feed will contain 1-500 ppm, preferably 100-400 ppm or 150-300 ppm of the mixture of active ingredients according to the invention.

Examples of particularly preferred dosages of for example the three compounds thymol, turmeric and guajacol in a final horse feed are independently from each other in the following ranges:
thymol between 30 and 150 ppm, preferably between 50 and 100 ppm;
tumeric between 20 and 100 ppm, preferably between 30 and 80 ppm;
guajacol between 10 and 80 ppm, preferably between 25 and 60 ppm.

Further, optional, feed-additive ingredients are coloring agents, e.g. carotenoids such as beta-carotene, astaxanthin, and lutein; aroma compounds; stabilisers; antimicrobial peptides; polyunsaturated fatty acids; and/or at least one enzyme selected from amongst phytase (EC 3.1.3.8 or 3.1.3.26); xylanase (EC 3.2.1.8); galactanase (EC 3.2.1.89); alpha-galactosidase (EC 3.2.1.22); protease (EC 3.4.), phospholipase A1 (EC 3.1.1.32); phospholipase A2 (EC 3.1.1.4); lysophospholipase (EC 3.1.1.5); phospholipase C (EC 3.1.4.3); phospholipase D (EC 3.1.4.4); amylase such as, for example, alpha-amylase (EC 3.2.1.1); and/or betaglucanase (EC 3.2.1.4 or EC 3.2.1.6).

Examples of polyunsaturated fatty acids are C18, C20 and C22 polyunsaturated fatty acids, such as arachidonic acid, docosohexaenoic acid, eicosapentaenoic acid and gamma-linoleic acid.

The term "horse feed" as used herein includes a feed composition according to the invention and components as described above. Typically, horse feed includes horse meal as a component. Suitably, horse feed is in the form of flakes or pellets, for example extruded pellets.

A horse feed has a proximate composition of 8-20 wt% protein, and 3-15 wt% moisture. High performance horses live under conditions that are characterized by a high energy requirement. Therefore, a typical horse feed for race horses comprises an increased amount of energy rich starch, for example corn starch. The utilization of starch decreases markedly when intake is increased beyond maintenance levels because the horse has a limited source of enzymes, especially amylases, which are able to reduce the starch. These un-natural feeding methods result in problems as discussed above.

The inventors of the present application surprisingly found that the compounds as defined above, especially combinations thereof have also a great potential for the stimulation of digestive enzymes, as for example amylases produced from both pancreas and the intestinal mucosa.

Therefore, the invention also relates to the use of the three compounds as defined above for the stimulation of digestive enzymes, preferably amylases.

It is another object of the present invention to provide alternative, preferably improved, amylases which may be used in combination with the essential oil compounds defined above for improving feed utilization, i.e. for degrading starch in the rumen, in the large intestines, and/or in the small intestines.

Therefore, the present invention also relates to the use of the three compounds as defined above in combination with an amylase in feed for animals of the genus equidae, such as horses, in particular for improving starch degradation. The invention further relates to compositions such as feed and feed additives comprising an amylase, for example a bacterial amylase, in combination with essential oil compounds defined above.

The amylases useful according to the invention furthermore, or in the alternative, may have improved properties such as dose-response profile, pH-profile, pelleting-stability, temperature-stability, bile-salt stability, protease-stability, and/or specific activity.

In the present context, an amylase is an enzyme that catalyzes the endo-hydrolysis of starch and other linear and branched oligo- and polysaccharides. In a particular embodiment, the amylase for use according to the invention has alpha-amylase activity, viz. catalyzes the endohydrolysis of 1,4-alpha-glucosidic linkages in oligosaccharides and polysaccharides.

Alpha-amylases act, e.g., on starch, glycogen and related polysaccharides and oligosaccharides in a random manner, liberating reducing groups in the alpha-configuration.

In a preferred embodiment the amylase of the invention is an alpha-amylase (systematical name: 1,4-alpha-D-glucan glucanohydrolase). In further embodiments, the amylase of the invention belongs to the EC 3.2.1.- group of amylases, such as EC 3.2.1.1 (alpha-amylase), EC 3.2.1.2 (beta-amylase), EC 3.2.1.3 (glucan 1,4-alpha-glucosidase, amyloglucosidase, or glucoamylase), EC 3.2.1.20 (alpha-glucosidase), EC 3.2.1.60 (glucan 1,4-alphamaltotetraohydrolase), EC 3.2.1.68 (isoamylase), EC 3.2.1.98 (glucan 1,4-alphamaltohexosidase), or EC 3.2.1.133 (glucan 1,4-alpha-maltohydrolase).

In a preferred embodiment, the amylase for use according to the invention can be, or is, classified as belonging to the EC 3.2.1.1 group. The EC numbers refer to Enzyme Nomenclature 1992 from NC-IUBMB, Academic Press, San Diego, California, including supplements 1-5 published in Eur. J. Biochem. 1994, 223, 1-5; Eur. J. Biochem. 1995, 232, 1-6; Eur. J. Biochem. 1996, 237, 1-5; Eur. J. Biochem. 1997, 250, 1-6; and Eur. J. Biochem. 1999, 264, 610-650; respectively. The nomenclature is regularly supplemented and updated; see e.g. at http://www.chem.qmw.ac.uk/iubmb/enzyme/index.html.

Amylase activity may be determined by any suitable assay. Generally, assay-pH and assay-temperature may be adapted to the enzyme in question. Examples of assay-pH-values are pH 2, 3, 4, 5, 6, 7, 8, 9, 10, 11, or 12. Examples of assay-temperatures are 30, 35, 37, 40, 45, 50, 55, 60, 65, 70, 80, 90, or 95°C. Preferred pH values and temperatures are in the physiological range, such as pH values of 3, 4, 5, 6, 7, or 8, and temperatures of 30, 35, 37, or 40°C. The following amylase assay can be used: Substrate: Phadebas tablets (Pharmacia Diagnostics; cross-linked, insoluble, blue-coloured starch polymer, which is mixed with bovine serum albumin and a buffer substance, and manufactured into tablets). Assay Temperature: 37°C. Assay pH: 4.3 (or 7.0, if desired). Reaction time: 20 min. After suspension in water the starch is hydrolyzed by the alpha-amylase, giving soluble blue fragments. The absorbance of the resulting blue solution, measured at 620 nm, is a function of the alpha-amylase activity. One Fungal alpha-Amylase Unit (1 FAU) is the amount of enzyme which breaks down 5.26 g starch per hour at the standard assay conditions. A preferred starch is Merck, Amylum solubile Erg. B. 6, Batch 9947275. A more detailed assay description, APTSMYQI-3207, is available on request from Novozymes A/S, Krogshoejvej 36, DK-2880 Bagsvaerd, Denmark.

In a particular embodiment, the amylase, in the form in which it is added to the feed, or when being included in a feed additive, is well-defined. Well-defined means, that the amylase preparation is at least 50% pure on a protein-basis. In other particular embodiments the amylase preparation is at least 60, 70, 80, 85, 88, 90, 92, 94, or at least 95% pure. Purity may be determined by any method known in the art, e.g. by SDS-PAGE, or by Size-exclusion chromatography (see Example 12 of WO 01/58275).

A well-defined amylase preparation is advantageous. For instance, it is much easier to dose correctly to the feed an amylase that is essentially free from interfering or contaminating other enzymes. The term dose correctly refers in particular to the objective of obtaining consistent and constant results, and the capability of optimising dosage based upon the desired effect.

Amylase preparations with purities of this order of magnitude are in particular obtainable using recombinant methods of production, whereas they are not so easily obtained and also subject to a much higher batch-to-batch variation when produced by traditional fermentation methods.

Isolation, purification, and concentration of the amylase of the invention may be carried out by conventional means. For example, it may be recovered from a fermentation broth by conventional procedures including, but not limited to, centrifugation, filtration, extraction, spray-drying, evaporation, or precipitation, and further purified by a variety of procedures known in the art including, but not limited to, chromatography (e.g., ion exchange, affinity, hydrophobic, chromatofocusing, and size exclusion), electrophoretic procedures (e.g., preparative isoelectric focusing), differential solubility (e.g., ammonium sulphate precipitation), SDS-PAGE, or extraction (see, e.g., Protein Purification, J.-C. Janson and Lars Ryden, editors, VCH Publishers, New York, 1989). The purified amylase may be formulated as is known in the art as a liquid or solid product suitable for use in animal feed and/or animal feed additives.

The bacterial amylase for use according to the invention is included in horse diets or horse feed additives in an effective amount. It is presently contemplated that an effective amount is below 1000 mg enzyme protein per kg diet dry matter (ppm), preferably below 800, 600, 500, 400, or below 300 ppm. In a preferred embodiment, the dosage of the amylase is below 200 mg enzyme protein per kg diet dry matter, preferably below 150, 100, 90, 80, 70, 60, or below 50 ppm. In an even more preferred embodiment, the dosage of the amylase is below 40, 35, 30, 25, or below 20 ppm. In a most preferred embodiment, the dosage of the amylase is below 15, 12, 10, 9, 8, or below 7 mg enzyme protein per kg diet dry matter. On the other hand, an effective amount may be above 0.01 mg enzyme protein per kg diet dry matter, preferably above 0.05, 0.10, 0.15, 0.20, 0.25, 0.30, 0.35, 0.40, 0.45, 0.50, 0.75, 1, 2, 3, or above 4 mg enzyme protein per kg diet dry matter (ppm). Accordingly, non-limiting examples of preferred dose ranges are: 0.10-50 mg enzyme protein/kg, preferably 0.50-10, 1-9, 2-8, 3-8, or 4-7 mg enzyme protein/kg. Additional examples of preferred dosage ranges, all in ppm, are: 1-35, 1-30, 2-25, 3-20, and 4-15.

For determining mg amylase protein per kg feed, the amylase is purified from the feed composition, and the specific activity of the purified amylase is determined using the desired amylase assay. The amylase activity of the feed composition as such is also determined using the same assay, and on the basis of these two determinations, the dosage in mg amylase enzme protein per kg feed is calculated.

The same principles apply for determining mg amylase protein in feed additives. Of course, if a sample is available of the amylase used for preparing the feed additive or the feed, the specific activity is determined from this sample (no need to purify the amylase from the feed composition or the additive).

The amylase for use according to the invention is preferably derived from a strain of Bacillus, such as strains of Bacillus amyloliquefaciens, Bacillus circulans, Bacillus halmapalus, Bacillus licheniformis, Bacillus megaterium, Bacillus sp., Bacillus stearothermophilus, and Bacillus subtilis; preferably from strains of Bacillus amyloliquefaciens, Bacillus halmapalus, Bacillus licheniformis, Bacillus sp., Bacillus subtilis, and Bacillus stearothermophilus; more preferably from strains of Bacillus amyloliquefaciens, Bacillus halmapalus, Bacillus licheniformis, Bacillus sp., and Bacillus stearothermophilus; even more preferably from Bacillus amyloliquefaciens, Bacillus halmapalus, Bacillus sp., and Bacillus stearothermophilus; most preferably from Bacillus stearothermophilus.

Non-limiting examples of amylases for use according to the invention are those derived from Bacillus licheniformis, such as Swissprot entry name AMY_BACLI, primary accession number P06278; Bacillus amyloliquefaciens, such as Swissprot entry name AMY_BACAM, primary accession number P00692; Bacillus megaterium, such as Swissprot entry name AMY_BACME, primary accession number P20845; Bacillus circulans, such as Swissprot entry name AMY_BACCI, primary accession number P08137; Bacillus stearothermophilus, such as Swissprot entry name AMY_BACST, primary accession number P06279. Another example is from Bacillus subtilis, such as Swissprot entry name AMY_BACSU, primary accession number P00691.

For purposes of the present invention, preferred amylases are the amylases contained in the following commercial products: BAN, Stainzyme, Termamyl SC, Natalase, and Duramyl (all from Novozymes).

Further particular examples of amylases for use accoding to the invention are the amylases contained in the commercial Validase BAA and Validase HT products (from Valley Research).

Still further particular examples of amylases for use according to the invention are the amylases contained in the following commercial products: Clarase, DexLo, GC 262 SP, G-Zyme G990, G-Zyme G995, G-Zyme G997, G-Zyme G998, HTAA, Optimax 7525, Purastar OxAm, Purastar ST, Spezyme AA, Spezyme Alpha, Spezyme BBA, Spezyme Delta AA, Spezyme DBA, Spezyme Ethyl, Spezyme Fred (GC521), Spezyme HPA, Spezyme Extra, and Ultraphlow (all from Genencor); Validase HT340L, Valley Thin 340L (all from Valley Research); Avizyme 1500, Dextro 300 L, Kleistase, Maltazyme, Maxamyl, Thermozyme, Thermatex, Starzyme HT 120 L, Starzyme Super Conc, and Ultraphlo.

The invention described and claimed herein is not to be limited in scope by the specific embodiments herein disclosed, since these embodiments are intended as illustrations of several aspects of the invention. Any equivalent embodiments are intended to be within the scope of this invention. Indeed, various modifications of the invention in addition to those shown and described herein will become apparent to those skilled in the art from the foregoing description. Such modifications are also intended to fall within the scope of the appended claims.

The following specific Example is intended to illustrate the invention.

### Example 1: Horse feed

A horse compound feed ("High Energy Müsli, Eggersmann") containing a mixture of compounds according to the invention can be prepared by mixing the following ingredients together using a conventional mixing apparatus at room temperature.

| Ingredient | Amount (per kg) |
|---|---|
| Barley (flakes) | 356 g |
| Maize | 264 g |
| Soybean Meal | 87 g |
| Molasses | 57g |
| Oil | 51 g |
| Maize expanded | 50 g |
| Peas (flakes) | 44 g |
| Wheat bran | 41 g |
| DCP | 10 g |
| NaCl | 6 g |
| MgO | 2 g |
| Brewer's yeast, dried | 1 g |
| Brewer's residues | 1 g |
| Vitamins and trace elements premix | 30 g |
| thymol | 5 mg |
| turmeric | 2 mg |
| guajacol | 0.35 mg |

### Example 2: Effect of essential oil compounds on palatability, caecal pH, caecal volatile fatty acids and ammonia concentrations and numbers of caecal protozoa.

A trial with three horses was performed. Beside an un-supplemented control treatment 312.5 mg of a feed composition comprising thymol, turmeric and guajacol (herein abbreviated by CRINA) was added to one kg of feed.

CRINA composition comprises as main active ingredients the following compounds, wherein these compounds are blended on a vegetable and mineral carrier comprising wood fibre, wheat semolina and calcium carbonate:

**CRINA Composition:**

| Active Ingredients | % (w/w) | |
|---|---|---|
| Thymol | 10 | 100g/kg |
| Turmeric powder | 8 | 80g/kg |
| Guajacol | 8 | 60g/kg |

Application in mg/day/100 kg bodyweight: 60

The study was performed with 3 geldings (Norwegian Cold-blooded Trotter) aged 8-11 years and with body weights 530-560 kg at the experimental stable at the Norwegian University of Life Sciences, Aas, Norway.

The horses were kept in tie stalls bedded with wood shavings and exercised one hour daily in a computer controlled outdoor rotary exerciser (Ø 27m).

There were two exercise intensities:
1. Exercise intensity 1: Walk (40 minutes), slow trot (20 minutes).
2. Exercise intensity 2: Walk (20 minutes), slow trot (20 minutes), canter (20 minutes).
3. Velocity: Walk (1,8 m/sec), slow trot (3,5-4,0 m/sec), canter (6,5 m/sec).

### Feeds and feeding

Daily rations consisted of meadow hay (mainly timothy) and either pelleted barley with 3% molasses (control diet) or pelleted barley with 3 % molasses and 0,03125 % CRINA (experimental diet).

**Table 1. Daily rations of hay and pelleted barley (kg).**

| Meal | Exercise level 1 | | Exercise level 2 | |
|---|---|---|---|---|
| | Meadow hay | Pelleted barley^{ab} | Meadow hay | Pelleted barley^{ab} |
| Morning, 08:00h | 2 | 2,2 | 2 | 2,2 |
| Midday, 14:00h | 2 | 0 | 2 | 0,5 |
| Evening, 19:00h | 3 | 0 | 3 | 0,5 |

| | | | | |
|---|---|---|---|---|
| a Control diet: Pelleted barley without CRINA. b CRINA diet: Pelleted barley with CRINA. | | | | |

The amount of pelleted barley was increased on Exercise level 2. However, the morning meal was identical on both exercise levels. Meadow hay of the same crop was used throughout the experiment. (Chemical analysis of hay: Dry matter (92,2%), Ash (5,25%), NDF (57,8%), Kjeldahl-N (11,4%); Starch content of the barley was 52,1%.)

### Experimental design

The experiment was divided into 4 periods according to diet and exercise intensity (Table 2). Each period consisted of a 23 days preparation period before sampling of caecal fluid on days 24 and 27, and logging of caecal pH on day 28. After chemical analysis, means of data from days 24 and 27 were calculated and used for the statisstical analysis.

**Table 2. Dietary treatments and exercise intensities.**

| | | Diet | | |
|---|---|---|---|---|
| Periode | Exercise intensity | Horse 1 | Horse 2 | Horse 3 |
| 1 | 1 | Control | Experimental | Control |
| 2 | 1 | Experimental | Control | Experimental |
| 3 | 2 | Control | Experimental | Control |
| 4 | 2 | Experimental | Control | Experimental |

### Chemical analysis

Dry matter was determined in samples oven-dried at 103 °C for a minimum of 16 hours. Ash and Kjeldahl-N were determined according to AOAC (1990). NDF was determined as described by Goering and van Soest (1970) with the modification that the samples were not washed in aceton. The method of Mcleary et al. (1994) was used for determination of starch without correction for sugar.

Volatile acids in caecal liquid were determined by gas chromatography by the Perkin-Elmer Auto System (Perkin-Elmer Inc., Norwalk, CT, US) using an ECONO-CapTM column (Alltech Associates Inc., Deerfield, IL, US). Ammonia nitrogen (NH3-N) in caecal fluid was assayed using the procedure of Tingwall (1978) and the flow injection analyser FIA 5035 Spectrophotometer; Techator AB, Høganäs, Sweden.

Measurements of pH: The pH was measured by placing a pH-electrode directly into the caecum through the fistula, and values were logged automatically every 5 seconds (WTW-pH 340, Ehlert & Partner, Germany).

Sampling of caecal content: The caecal content was manually evacuated through the caecal fistula before the morning meal and 3 hours and 6 hours post feeding. Ten ml was saved on tubes containing 1 ml of formic acid and stored at 4°C until analysis of VFA.

### Statistical analysis

Statistical analyses of palatability (time to eat the concentrates after the morning meal) were performed using the Proc Mixed procedure of SAS (1998). The repeated statement was used to indicate the within subject (repeated) variables (daily individual registrations of eating time). In the model, fixed effects were individual horse and diet. Time (day) was defined a random effect. The covariance structure of the repeated measures was compound symmetry (type=cs).

Statistical analyses of caecal VFA was performed using the GLM procedure of SAS (1998). Means were calculated for samples from day 24 and 27 in each period, and used for the statistical analysis. Individual horse, diet and exercise intensity were included in the statistical model as explanatory effects. The effect of exercise intensity was not significant, and was taken out of the model. Means were separated according to the least significant difference (LSD) test. All results are presented as LSMEANS for each treatment. In the appendix values are given as means ± standard deviation.

### Results

### Palatability

The time each horse needed to eat the morning meal of pelleted barley was registered for 34 consecutive days. There was no effect of exercise intensity, so this effect was excluded from the model. The horses consumed the morning meal of concentrates faster when CRINA was included in the pelleted barley (16,9 min) compared to the control without CRINA (19,5 min) (p<0,001). Feed recidues were registered on 7 occations, six times on the control diet and one time on the CRINA diet. When residues were registered on the CRINA diet (0,1 kg) it was the first time that horse was offered feed with CRINA.

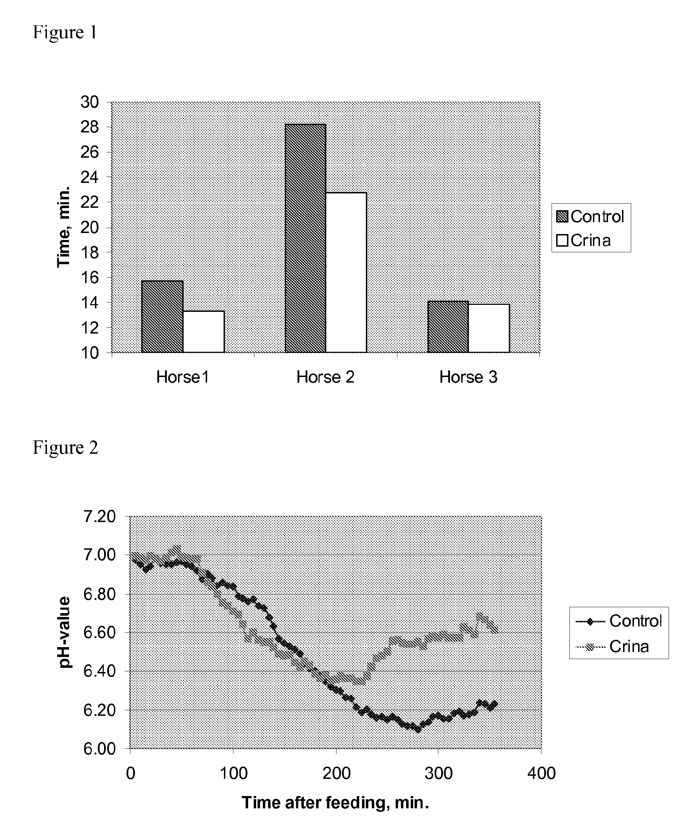

There was also an effect of individual horse (p<0,001), but no interaction between horse and diet (Figure 1 and Table 3 - Time spent eating the morning meal of concentrates.). Horse 2 had the highest difference in eating time between the control- and CRINA diet. This horse could be charactericed a "slow eater" and is in general a difficult horse to feed as he often reacts to new feeds or increased amounts of feed by leaving recidues. There was also a marked difference between diets for Horse 1 which could be charactericed as a "normal horse" when it comes to feed intake. Horse 3, however, would eat about everything offered, and we could see very little difference in time spent eating the different diets. Even though there were only three individual horses in this trial, it was interesting to observe that the effect of CRINA on palatability (eating time) was more pronounced for the slow eater than for the fast eater.

**Table 3. Time spent eating the morning meal of concentrates (min).**

| | Diet | |
|---|---|---|
| | Control | CRINA |
| Mean | 20,3 ±8,2 | 16,0 ± 4,5 |
| Horse 1 | 15,7 ± 3,4 | 13,3 ± 1,0 |
| Horse 2 | 28,1 ± 7,3 | 22,8 ± 3,9 |
| Horse 3 | 14,1 ± 1,9 | 13,9 ± 0,9 |

According to literature, the average normal time to eat one kg of pelleted concentrate is about 10 minutes for big horses, but with great individual variations (Meyer, H., L. Ahlswede and H. Reinhard, 1975. Untersuchungen über Fressdauer, Kaufrequenz und Futterzerkleinerung beim Pferd. Dtsch. Tieräztl. Wschr. 82, 54-58.). In the present study, Horse 1 and Horse 3 ate faster and Horse 2 slower compared to these figures.

### Caecal pH-values

Logging the pH-value in the caecum every 5 minutes for 6 hours post feeding gave a good picture of the changes in caecal pH (Figure 2 - Caecal pH-values).

Caecal pH was close to 7,0 at start of the logging period. At about 60 minutes post feeding, the values started to decline independant of diet. On the CRINA diet, values reached a minimum of 6,35 at about 200 minutes and started to increase again at 225 minutes. By the end of the logging period (335 minutes post feeding) the pH-value was 6,6. On the control diet, however, values kept going down until the lowest values (6,1) were reached at 280 minutes post feeding. Thereafter, values increased until 6,2 by the end of the logging period. Figure 2 clearly shows that CRINA had affected the changes in caecal pH.

### Volatile fatty acids

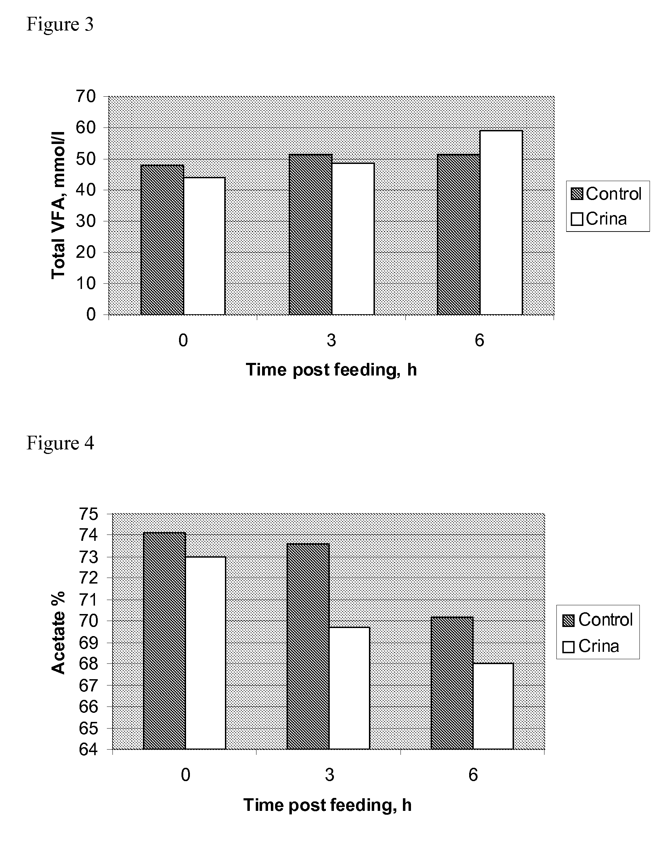

The amount of total volatile fatty acids (VFA) in caecal fluid was not influenced by diet. Values for the Control diet and the CRINA diet were 50,22 and 50,48 mmol/l, respectively (p=0,91) (Figure 3 - Total caecal volatile fatty acids (mmol/l) and Table 4).

**Table 4. Concentrations of total caecal VFA and molar % of VFA, and concentration of caecal ammonia nitrogen (Means ± st.deviation).**

| | Hours post feeding | | | |
|---|---|---|---|---|
| | 0 | 3 | 6 | Mean |
| Total caecal VFA, mmol/l: | | | | |
| Control diet | 48,1 ± 13,5 | 51,3 ± 8,4 | 51,2 ± 9,6 | 50,2 ± 10,2 |
| CRINA diet | 43,9 ± 5,6 | 48,6 ± 8,5 | 58,9 ± 9,4 | 50,5 ± 9,9 |
| | | | | |
| Acetate, molar %: | | | | |
| Control diet | 74,1 ± 2,3 | 73,6 ± 4,7 | 70,2 ± 5,2 | 72,6 ± 4,4 |
| CRINA diet | 73,0 ± 1,7 | 69,7 ± 2,1 | 68,0 ± 2,2 | 70,2 ± 2,8 |
| | | | | |
| Propionate, molar %: | | | | |
| Control diet | 18,5 ± 3,0 | 15,9 ± 3,5 | 20,5 ± 4,6 | 18,3 ± 4,0 |
| CRINA diet | 19,7 ± 1,3 | 19,8 ± 2,4 | 24,1 ± 1,9 | 21,2 ± 2,8 |
| | | | | |
| Butyrate, molar %: | | | | |
| Control diet | 6,2 ± 0,6 | 7,8 ± 0,5 | 7,7 ± 0,8 | 7,2 ± 1,0 |
| CRINA diet | 6,1 ± 0,7 | 6,7 ± 1,2 | 6,7 ± 1,3 | 6,5 ± 1,1 |

However, the molar percentages of the different VFA's were influenced by diet.

For the Control diet and the CRINA diet the molar percentages of acetate were 72,63 and 70,22, respectively (p<0,001). These differences were only significant (p<0,05) at 3 hours post feeding (Figure 4 - Molar percent of caecal acetate).

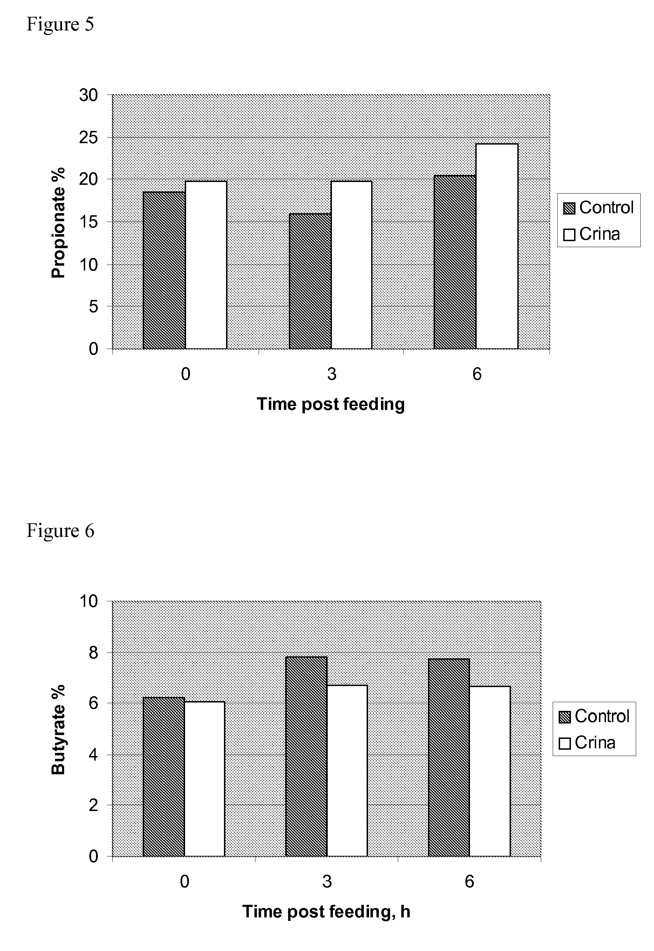

Molar percent of propionate was lower on the Control diet than the CRINA diet, 18,31 and 21,22, respectively (p<0,003). These differences could be seen at time 0, 3 and 6 hours post feeding, and reached a significant level at time 3 and 6 hours post feeding (Figure 5 - Molar percent of caecal propionate.

Molar percent of butyrate was higher on the Control diet than the CRINA diet, 7,25 and 6,47, respectively (p<0,01). These differences reached a significant level at time 3 and 6 hours post feeding (p<0,05) (Figure 6 - Molar percent of caecal butyrate.)

### Conclusions

- Inclusion of CRINA to the pelleted barley improved palatability measured as time spent eating the morning meal of concentrates and also reduced refusals.
- Caecal pH-values were influenced by diet. The fall in pH until 6 hours post feeding was less when the horses were fed the CRINA diet than the Control diet.
- Concentration of caecal total volatile fatty acids was not influenced by diet.
- Molar percent of the caecal volatile fatty acids was influenced by diet, as acetate (C2) and butyrate (C4) were reduced while propionate (C3) increased on the CRINA diet.

Adding CRINA to the pelleted barley (CRINA diet) had a positive effect on palatability measured as time spent to eat the morning meal of concentrate (p<0,001). On the CRINA diet, the fall in caecal pH-values after the morning meal was reduced. There was also effect of CRINA on the molar percentages of caecal volatile fatty acids (VFA), with a reduction of acetate (p<0,001) and butyrate (p<0,01), and increased proportions of pyruvate (p<0,003). The concentration of total caecal VFA did not differ between diets. There was no effect of CRINA on caecal ammonia concentration or the concentration of protozoa in caecal fluid. Exercise intensity did not influence any of the registered parameters.

## Claims

1. Composition comprising an effective amount of a mixture of natural active compounds, wherein said mixture comprises guajacol, turmeric, and thymol, for use in stabilising gut pH at a level > 6.3 in horses, and wherein thymol, turmeric and guajacol are used in amounts sufficient to provide a daily dosage of 0.25 mg to 1 mg thymol and turmeric and of 0.1 mg to 0.5 mg guajacol per kg body weight of the subject to which it is to be administered.

2. Composition for use according to claim 1, wherein said mixture is combined with an amylase for improving feed utilization, i.e. for degrading starch in the large intestines and/or in the small intestines.

## Patentansprüche

1. Zusammensetzung, umfassend eine wirksame Menge einer Mischung aus natürlichen Wirkstoffen, wobei die Mischung Guajacol, Gelbwurz und Thymol umfasst, zur Verwendung beim Stabilisieren des Darm-pH-Werts auf ein Niveau von >6,3 beim Pferd, wobei Thymol, Gelbwurz und Guajacol in Mengen verwendet werden, die ausreichen, um eine Tagesdosis von 0,25 mg bis 1 mg Thymol und Gelbwurz und von 0,1 mg bis 0,5 mg Guajacol pro kg Körpergewicht in dem Individuum, an das sie zu verabreichen ist, bereitstellen.

2. Zusammensetzung zur Verwendung nach Anspruch 1, wobei die Mischung mit einer Amylase zum Verbessern der Futterverwertung, d.h. zum Abbauen von Stärke im Dickdarm und/oder im Dünndarm, kombiniert ist.

## Revendications

1. Composition comprenant une quantité efficace d'un mélange de composés actifs naturels, dans laquelle ledit mélange comprend du gaïacol, du curcuma et du thymol, destinée à être utilisée pour stabiliser le pH intestinal à un niveau > 6,3 chez les chevaux, et dans laquelle le thymol, le curcuma et le gaïacol sont utilisés dans des quantités suffisantes pour apporter une dose quotidienne de 0,25 mg à 1 mg de thymol et de curcuma et de 0,1 mg à 0,5 mg de gaïacol par kg de poids corporel du sujet auquel elle doit être administrée.

2. Composition destinée à être utilisée selon la revendication 1, dans laquelle ledit mélange est combiné avec une amylase afin d'améliorer l'utilisation des aliments, c'est-à-dire afin de dégrader l'amidon dans le gros intestin et/ou dans l'intestin grêle.
